(19) Europäisches Patentamt
European Patent Office
Office européen des brevets

(11) **EP 3 000 164 B1**

(12) **EUROPEAN PATENT SPECIFICATION**

(45) Date of publication and mention
of the grant of the patent:
**04.09.2019 Bulletin 2019/36**

(21) Application number: **14826106.8**

(22) Date of filing: **16.07.2014**

(51) Int Cl.:
*H02J 50/10* (2016.01)    *H02J 50/90* (2016.01)
*H02J 50/80* (2016.01)    *H02J 50/12* (2016.01)
*H04B 5/00* (2006.01)    *H02J 7/02* (2016.01)

(86) International application number:
**PCT/KR2014/006411**

(87) International publication number:
**WO 2015/009042 (22.01.2015 Gazette 2015/03)**

(54) **METHOD AND APPARATUS FOR DETECTING COUPLING REGION**

VERFAHREN UND VORRICHTUNG ZUR ERKENNUNG EINER KUPPLUNGSREGION

PROCÉDÉ ET APPAREIL DE DÉTECTION DE ZONE DE COUPLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2013 KR 20130084194**

(43) Date of publication of application:
**30.03.2016 Bulletin 2016/13**

(73) Proprietor: **Samsung Electronics Co., Ltd.**
**Suwon-si, Gyeonggi-do 443-742 (KR)**

(72) Inventor: **KIM, Nam Yun**
**Seoul 134- 753 (KR)**

(74) Representative: **Appleyard Lees IP LLP**
**15 Clare Road**
**Halifax HX1 2HY (GB)**

(56) References cited:
**WO-A1-03/105308**    **WO-A1-2012/102302**
**WO-A2-2012/169861**    **KR-A- 20120 005 112**
**US-A1- 2006 113 955**    **US-A1- 2011 279 244**
**US-A1- 2012 001 591**

## Description

BACKGROUND

1. Field

The following description relates to a method and apparatus to detect an optimum coupling region in a wireless charging system.

2. Description of Related Art

Wireless power transmission has been able to overcome some inconveniences involved with wired power supplies. Also, wireless power transmission has improved performance of conventional batteries with limited voltage capacity. Wireless power transmission is now implemented in various electronic devices including electric vehicles, mobile devices, and consumer electronics. One of wireless power transmission technologies uses resonance characteristics of radio frequency (RF) devices. For example, a wireless power transmission system using resonance characteristics may include a source configured to supply power, and a target configured to receive the supplied power. WO 2012/169861 A2 discloses an apparatus for handling change in orientation of terminal during wireless power transfer and method thereof. WO03/105308 A1 discloses a planar inductive battery charger.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In accordance with an illustrative configuration, there is provided a method according to claim 1, a wireless power transmission apparatus according to claim 7 and a wireless power reception apparatus according to claim 12. Advantageous embodiments are described in the dependent claims. While several embodiments and/or examples are disclosed in this description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention.
Other features and aspects will be apparent from the following detailed description, the drawings, and the claims.

**Brief Description of Drawings**

These and/or other aspects will become apparent and more readily appreciated from the following description of the embodiments, taken in conjunction with the accompanying drawings in which:

FIG. 1 is a diagram illustrating an example of a wireless power transmission and reception system, in accordance with an embodiment.
FIGS. 2a through 2b are diagrams illustrating examples of a distribution of a magnetic field in a feeder and a resonator, in accordance with an embodiment.
FIGS. 3a and 3b are diagrams illustrating an example of a wireless power transmission apparatus, in accordance with an embodiment.
FIG. 4a is a diagram illustrating an example of a distribution of a magnetic field within a resonator based on feeding of a feeder, in accordance with an embodiment.
FIG. 4b is a diagram illustrating examples of equivalent circuits of a feeder and a resonator, in accordance with an embodiment.
FIG. 5 is a diagram illustrating an example of an electric vehicle charging system, in accordance with an embodiment.
FIG. 6 is a diagram illustrating an example of a coupling region detection system, in accordance with an embodiment.
FIG. 7 is a diagram illustrating an example of a coupling region detection system based on movement of a terminal, in accordance with an embodiment.
FIG. 8 is a flowchart illustrating an example of an operation method of a wireless power transmission apparatus to detect a coupling region, in accordance with an embodiment.
FIG. 9 is a diagram illustrating an example of the coupling region detection system to detect the coupling region using the wireless power transmission apparatus including a plurality of resonators, in accordance with an embodiment.
FIG. 10 is a diagram illustrating an example of the coupling region detection system to detect the coupling region using a resonator pad, in accordance with an embodiment.

FIG. 11 is a diagram illustrating an example of the coupling region detection system based on movement of the resonator pad.

FIG. 12 is a block diagram illustrating an example of a wireless power transmission apparatus and an example of a wireless power reception apparatus, in accordance with an embodiment.

FIG. 13 is a diagram illustrating an example of a load detection principle, in accordance with an embodiment.

FIG. 14 is a diagram illustrating an example of the wireless power reception apparatus and an example of the wireless power transmission apparatus in which a wireless charging pad is embedded, in accordance with an embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

**Mode for the Invention**

The following detailed description is provided to assist the reader in gaining a comprehensive understanding of the methods, apparatuses, and/or systems described herein. Accordingly, various changes, modifications, and equivalents of the systems, apparatuses, and/or methods described herein will be suggested to those of ordinary skill in the art. The progression of processing steps and/or operations described is an example; however, the sequence of steps and/or operations is not limited to that set forth herein and may be changed as is known in the art, with the exception of steps and/or operations necessarily occurring in a certain order. Also, description of well-known functions and constructions may be omitted for increased clarity and conciseness.

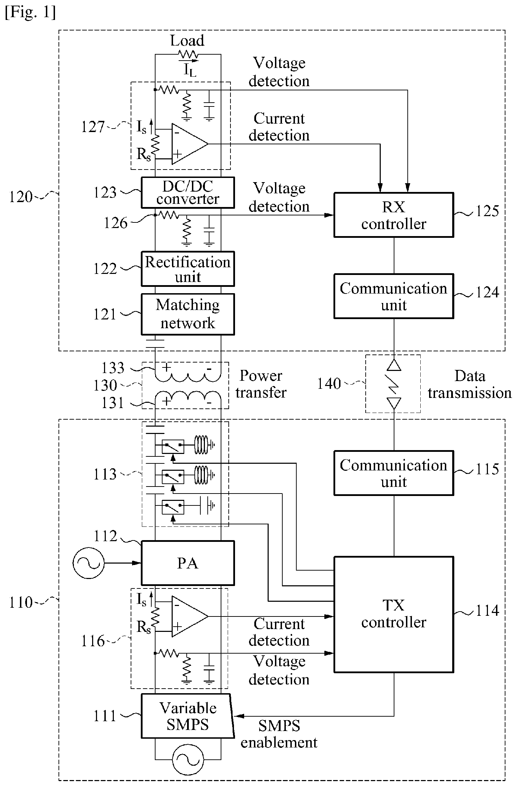

FIG. 1 illustrates an example of a wireless power transmission and reception system, in accordance with an embodiment.

Referring to FIG. 1, the wireless power transmission and reception system includes a source 110 and a target 120. The source 110 refers to a device configured to supply wireless power, and may include any electronic device configured to supply power, for example, a magnetic induction charging pad, an outlet in an electric vehicle or a terminal, or an antenna. The target 120 refers to a device configured to receive wireless power, and includes any electronic device requiring power to operate, for example, an electronic pad, a terminal, a tablet personal computer (PC), a medical device, or an electric vehicle.

The source 110 includes a variable switching mode power supply (SMPS) 111, a power amplifier (PA) 112, a matching network 113, a transmission (TX) controller 114 (for example, a TX control logic), and a communication unit 115.

The variable SMPS 111 generates a direct current (DC) voltage by switching alternating current (AC) voltage in a band of tens of hertz (Hz) output from a power supply. The variable SMPS 111 outputs DC voltage at a predetermined level, or adjusts an output level of DC voltage based on the control of the TX controller 114.

The variable SMPS 111 controls a supplied voltage based on a level of output power from the PA 112 so that the PA 112 is operated at a saturation region with high efficiency at all times, and enables a maximum efficiency to be maintained at all levels of the output power. The PA 112 may have class-E features.

For example, when a common SMPS is used instead of the variable SMPS 111, a variable DC-to-DC (DC/DC) converter is additionally used. In this example, the common SMPS and the variable DC/DC converter control the voltage supplied based on the level of the power output from the PA 112 so that the PA 112 is operated at the saturation region with high efficiency at all times, and enables the maximum efficiency to be maintained at all levels of the output power.

A power detector 116 detects output current and output voltage from the variable SMPS 111, and transfers to the TX controller 114 information about the detected current and the detected voltage. Additionally, the power detector 116 detects input current and input voltage of the PA 112.

The PA 112 converts DC voltage, at a predetermined level, to AC voltage using a switching pulse signal at a band of a few megahertz (MHz) to tens of MHz. The PA 112 also generates power. Accordingly, the PA 112 converts receives DC voltage to AC voltage using a reference resonant frequency $F_{Ref}$, and generates communication power or charging power. Target devices may use the communication power to communicate with other devices or for charging.

In one example, the communication power refers to low power of 0.1 milliwatt (mW) to 1 mW. The charging power refers to high power of a few mW to tens of kW that is consumed in a device load of a target device. In various examples described herein, the term "charging" refers to supplying power to a structural unit or structural element that is configured to charge power. Additionally, the term "charging" refers to supplying power to the structural unit or the structural element that is configured to consume power. The structural unit or structural element may include, for example, batteries, displays, sound output circuits, main processors, and various sensors.

Also, "reference resonant frequency" is a resonant frequency that is used at the source 110. Additionally, "tracking frequency" is a resonant frequency that is adjusted by a preset scheme.

It will be understood that when an element or portion is referred to as being "on" or "connected to" another element or layer, it can be directly on or connected to the other element or layer or through intervening elements or layers may be present. In contrast, when an element is referred to as being "directly on" or "directly connected to" another element or layer, there are no intervening elements or layers present. Like reference numerals refer to like elements throughout. As used herein, the term "and/or" includes any and all combinations of one or more of the associated listed items.

The PA 112 does not operate when a large amount of power corresponding to a few kilowatts (kW) to tens of kW is to be transmitted, using a resonant frequency, in a band of tens of kilohertz (KHz) to hundreds of KHz. Instead, power is transferred to a source resonator 131 from the variable SMPS 111 or a high-power power supply. In this instance, an inverter may be used in lieu of the PA 112. In this example, the inverter converts DC power supplied from the high-power power supply to AC power. The inverter converts the DC power by converting DC voltage at a predetermined level to AC voltage, using a switching pulse signal in a band of tens of KHz to hundreds of KHz. For example, the inverter converts the DC voltage at the predetermined level to the AC voltage, using a resonant frequency in a band of tens of KHz to hundreds of KHz of the source resonator 131.

The TX controller 114 detects a reflected wave of the communication power or the charging power, and detects mismatching that may occur between a target resonator 133 and the source resonator 131 based on the detected reflected wave. To detect the mismatching, for example, the TX controller 114 detects an envelope of the reflected wave, a power amount of the reflected wave, and the like.

The matching network 113 compensates for impedance mismatching between the source resonator 131 and the target resonator 133 to be optimally matched, under the control of the TX controller 114. The matching network 113 is connected through a switch, based on a combination of a capacitor and an inductor, under the control of the TX controller 114.

When a large amount of power is to be transmitted using a resonant frequency in a band of tens of KHz to hundreds of KHz, the configuration of the matching network 113 may be omitted from the source 110 because an effect of the matching network 113 is reduced when transmitting the large amount of the power.

The TX controller 114 computes a voltage standing wave ratio (VSWR) based on a voltage level of the reflected wave and based on a level of an output voltage of the source resonator 131 or the PA 112. In an example in which the VSWR is greater than a predetermined threshold, the TX controller 114 determines that mismatching exists.

In another example in which the VSWR is greater than the predetermined threshold, the TX controller 114 computes a power transmission efficiency for each of N tracking frequencies, determines a tracking frequency $F_{Best}$ with the best power transmission efficiency among the N tracking frequencies, and adjusts the reference resonant frequency $F_{Ref}$ to the tracking frequency $F_{Best}$. In various examples, the N tracking frequencies may be set in advance.

The TX controller 114 adjusts a frequency of a switching pulse signal. Under the control of the TX controller 114, the frequency of the switching pulse signal is determined. For example, by controlling the PA 112, the TX controller 114 processes and generates a modulation signal to be transmitted to the target 120. The communication unit 115 transmits a variety of data 140 to the target 120 using in-band communication. The TX controller 114 detects a reflected wave, and processes and demodulates a signal received from the target 120 through an envelope of the detected reflected wave.

The TX controller 114 generates a modulation signal for in-band communication, using various methods. For example, the TX controller 114 generates the modulation signal by turning on or off a switching pulse signal, by performing delta-sigma modulation, and the like. Additionally, the TX controller 114 generates a pulse-width modulation (PWM) signal with a predetermined envelope.

The TX controller 114 determines initial wireless power that is to be transmitted to the target 120, based on a change in a temperature of the source 110, a battery state of the target 120, a change in an amount of power received at the target 120, and/or a change in a temperature of the target 120.

The source 110 may further include a temperature measurement sensor (not illustrated) configured to detect a change in temperature. The source 110 receives from the target 120 information regarding the battery state of the target 120, the change in the amount of power received at the target 120, and/or the change in the temperature of the target 120, through communication with the target 120.

The change in the temperature of the target 120 is detected based on data received from the target 120.

The TX controller 114 adjusts voltage supplied to the PA 112, using a lookup table. The lookup table may be used to store an amount of the voltage to be adjusted based on the change in the temperature of the source 110. For example, when the temperature of the source 110 rises, the TX controller 114 lowers the amount of the voltage to be supplied to the PA 112.

The communication unit 115 performs out-band communication that employs a communication channel. The communication unit 115 includes a communication module, such as one configured to process ZigBee, Bluetooth, and the like. The communication unit 115 transmits the data 140 to the target 120 through the out-band communication.

The source resonator 131 transfers an electromagnetic energy 130 to the target resonator 133. For example, the source resonator 131 transfers the communication power or charging power to the target 120 using magnetic coupling with the target resonator 133. In an example, the source resonator 131 includes a superconductive material. In addition, although not illustrated in FIG. 1, the source resonator 131 is disposed in a container including a refrigerant so as to maintain a superconductive property of the source resonator 131. A heated refrigerant may be liquefied from a gaseous state to a liquid state by a cooler. In another example, the target resonator 133 includes a superconductive material. In this example, the target resonator 133 is disposed in a container including a refrigerant so as to maintain a superconductive property of the target resonator 133.

As illustrated in FIG. 1, the target 120 includes a matching network 121, a rectification unit 122, a DC/DC converter 123, a communication unit 124, and a reception (RX) controller 125, such as, an RX control logic.

The target resonator 133 receives the electromagnetic energy 130 from the source resonator 131. For example, the target resonator 133 receives the communication power or charging power from the source 110 using the magnetic coupling with the source resonator 131. Additionally, the target resonator 133 receives the data 140 from the source 110 using the in-band communication with the communication unit 115.

The target resonator 133 receives the initial wireless power that is determined based on the change in the temperature of the source 110, the battery state of the target 120, the change in the amount of power received at the target 120, and/or the change in the temperature of the target 120.

The matching network 121 matches an input impedance from the source 110 to an output impedance from a load in the target 120. The matching network 121 may be configured to include a combination of a capacitor and an inductor.

The rectification unit 122 generates DC voltage by rectifying AC voltage. The AC voltage may be received from the target resonator 133.

The DC/DC converter 123 adjusts a level of the DC voltage that is output from the rectification unit 122 based on a capacity required by the load. As an example, the DC/ DC converter 123 adjusts the level of the DC voltage output from the rectification unit 122 from 3 volts (V) to 10 V.

The power detector 127 detects voltage of an input terminal 126 of the DC/DC converter 123, and current and voltage of an output terminal of the DC/DC converter 123. The detected voltage at the input terminal 126 is used to compute a transmission efficiency of power received from the source 110. Additionally, the RX controller 125 uses the detected current and the detected voltage at the output terminal to compute an amount of power transferred to the load. The TX controller 114 of the source 110 determines an amount of power to be transmitted by the source 110 based on power required by the load and power transferred to the load.

When power of the output terminal computed using the communication unit 124 is transferred to the source 110, the source 110 computes an amount of power that needs to be transmitted to the load.

The communication unit 124 performs in-band communication to transmit or receive the data using a resonance frequency. During the in-band communication, the RX controller 125 demodulates a received signal by detecting a signal between the target resonator 133 and the rectification unit 122, or detecting an output signal of the rectification unit 122. In other words, the RX controller 125 demodulates a message received using the in-band communication. Additionally, the RX controller 125 adjusts an impedance of the target resonator 133 using the matching network 121 to modulate a signal to be transmitted to the source 110. For example, the RX controller 125 increases the impedance of the target resonator 133 so that a reflected wave is detected from the TX controller 114 of the source 110. The TX controller 114 detects a first value, for example a binary number "0" indicative that the reflected wave is not detected, or a second value, for example a binary number "1" indicative that the reflected wave is detected.

The communication unit 124 transmits a response message to the communication unit 115 of the source 110. For example, the response message may include a "type of a corresponding target," "information about a manufacturer of a corresponding target," "a model name of a corresponding target," a "battery type of a corresponding target," a "scheme of charging a corresponding target," an "impedance value of a load of a corresponding target," "information on characteristics of a target resonator of a corresponding target," "information on a frequency band used by a corresponding target," an "amount of a power consumed by a corresponding target," or an "identifier (ID) of a corresponding target," "information on version or standard of a corresponding target."

The communication unit 124 performs out-band communication that employs a separate communication channel. For example, the communication unit 124 may include a communication module, such as one configured to process ZigBee, Bluetooth, and the like. The communication unit 124 transmits or receives the data 140 to or from the source 110 using the out-band communication.

The communication unit 124 receives a wake-up request message from the source 110, and the power detector 127 detects an amount of power received at the target resonator 133. The communication unit 124 transmits to the source 110 information about the detected amount of the power. Information about the detected amount may include, for example, at least one of an input voltage value and an input current value of the rectification unit 122, an output voltage value and an output current value of the rectification unit 122, or an output voltage value and an output current value of the DC/DC converter 123.

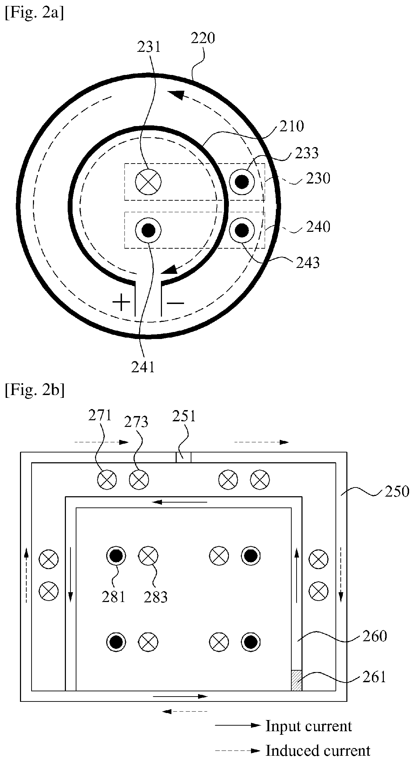

In the following description, the term "resonator" used in FIGS. 2A through 4B refers to both, a source resonator and a target resonator.

FIGS. 2a and 2b illustrate examples of a distribution of a magnetic field in a feeder and a resonator, in accordance with an embodiment.

When a resonator receives power supplied through a separate feeder, magnetic fields may be formed in both the feeder and the resonator.

A source resonator and a target resonator may have a dual loop structure including an external loop and an internal loop.

Referring to FIG. 2a, as input current flows into a feeder 210, a magnetic field 230 may be formed. A direction 231 of the magnetic field 230 within the feeder 210 is opposite to a direction 233 of the magnetic field 230 outside the feeder 210. The magnetic field 230 the feeder 210 forms may cause induced current to be formed in a resonator 220. The direction of the induced current may be opposite to a direction of the input current.

Due to the induced current, a magnetic field 240 is formed at the resonator 220. Directions of a magnetic field formed due to an induced current at all positions of the resonator 220 may be the same. Accordingly, a direction 241 of the magnetic field 240 formed by the resonator 220 may be identical to a direction 243 of the magnetic field 240 formed by the resonator 220.

Consequently, when the magnetic field 230 formed by the feeder 210 and the magnetic field 240 formed by the resonator 220 are combined, strength of the total magnetic field may decrease within the feeder 210. However, the strength may increase outside the feeder 210. In an example in which power is supplied to the resonator 220 through the feeder 210, as configured and illustrated in FIG. 2a, the strength of the total magnetic field decreases at the center of the resonator 220, but increases outside the resonator 220. In another example in which a magnetic field is randomly distributed in the resonator 220, impedance matching may be difficult to perform because an input impedance may frequently vary. Additionally, when the strength of the total magnetic field is increased, an efficiency of wireless power transmission may be increased. Conversely, when the strength of the total magnetic field is decreased, the efficiency for wireless power transmission may be reduced. Accordingly, the power transmission efficiency may be reduced on average.

FIG. 2b illustrates an example of a structure of a wireless power transmission apparatus in which a resonator 250 and a feeder 260 have a common ground, in accord with an embodiment. The resonator 250 includes a capacitor 251.

The feeder 260 receives an input of a radio frequency (RF) signal through a port 261. For example, when the RF signal is input to the feeder 260, input current is generated and transmitted through the feeder 260. The input current flowing through the feeder 260 causes a magnetic field to be formed, and a current is induced in the resonator 250 by the magnetic field. Additionally, another magnetic field may be formed due to the induced current flowing through the resonator 250. In this example, a direction of the input current flowing through the feeder 260 has a phase opposite to a phase of a direction of the induced current flowing through the resonator 250. Accordingly, in a region between the resonator 250 and the feeder 260, a direction 271 of the magnetic field formed due to the input current has the same phase as a direction 273 of the magnetic field formed due to the induced current. Consequently, the strength of the total magnetic field increases. Within the feeder 260, a direction 281 of the magnetic field formed due to the input current has a phase opposite to a phase of a direction 283 of the magnetic field formed due to the induced current. Consequently, the strength of the total magnetic field decreases. The strength of the total magnetic field may decrease in the center of the resonator 250, but may increase outside the resonator 250.

The feeder 260 controls an input impedance by adjusting an internal area of the feeder 260. The input impedance refers to an impedance viewed in a direction from the feeder 260 to the resonator 250. When the internal area of the feeder 260 is increased, the input impedance is increased. Conversely, when the internal area of the feeder 260 is reduced, the input impedance is reduced. Because the magnetic field is randomly distributed in the resonator 250 despite a reduction in the input impedance, a value of the input impedance varies based on a location of a target device. Accordingly, a separate matching network may be required to match the input impedance to an output impedance of a PA. For example, when the input impedance increases, a separate matching network may be used to match the increased input impedance to a relatively low output impedance.

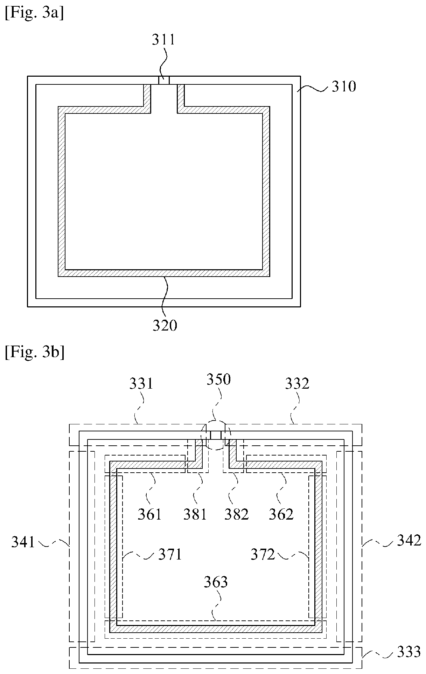

FIG. 3a illustrates an example of a wireless power transmission apparatus, in accordance with an embodiment.

Referring to FIG. 3a, the wireless power transmission apparatus includes a resonator 310, and a feeder 320. The resonator 310 may further include a capacitor 311. The feeder 320 is electrically connected to both ends of the capacitor 311.

FIG. 3b illustrates, in more detail, a structure of the wireless power transmission apparatus of FIG. 3a. The resonator 310 includes a first conductor 341, a second conductor 342, and at least one capacitor 350. The resonator 310 also includes a first transmission line, which includes a first signal conducting portion 331, a second signal conducting portion 332, and a first ground conducting portion 333.

As shown in FIG. 3b, the first transmission line includes at least one conductor in an upper portion of the first transmission line, and includes at least one conductor in a lower portion of the first transmission line. Current may flow through the at least one conductor disposed in the upper portion of the first transmission line. The at least one conductor disposed in the lower portion of the first transmission line may be electrically grounded. For example, a conductor disposed in an upper portion of the first transmission line may be divided and referred to as the first signal conducting portion 331 and the second signal conducting portion 332. A conductor disposed in a lower portion of the first transmission line is referred to as the first ground conducting portion 333.

The capacitor 350 is inserted in series between the first signal conducting portion 331 and the second signal conducting portion 332 of the first transmission line. An electric field is confined within the capacitor 350.

As illustrated in FIG. 3b, the resonator 310 has a two-dimensional (2D) structure. The first transmission line includes the first signal conducting portion 331 and the second signal conducting portion 332 in the upper portion of the first transmission line. In addition, the first transmission line may include the first ground conducting portion 333 in the lower portion of the first transmission line. The first signal conducting portion 331 and the second signal conducting portion 332 face the first ground conducting portion 333. Current flows through the first signal conducting portion 331 and the second signal conducting portion 332.

Additionally, one end of the first signal conducting portion 331 is electrically connected (i.e., shorted) to the first conductor 341, and another end of the first signal conducting portion 331 is connected to the capacitor 350. One end of the second signal conducting portion 332 may be shorted to the second conductor 342, and another end of the second signal conducting portion 332 may be connected to the capacitor 350. Accordingly, the first signal conducting portion 331, the second signal conducting portion 332, the first ground conducting portion 333, and the first and second conductors 341 and 342 may be connected to each other, so that the resonator 310 may have an electrically closed-loop structure. The term "loop structure" may include, for example, a polygonal structure such as a circular structure, a rectangular structure, or other structural shape. A structure, for example the resonator 310, "having a loop structure" may be used to indicate that the circuit is electrically closed.

The capacitor 350 is inserted into an intermediate portion of the first transmission line. For example, the capacitor 350 may be inserted into a space between the first signal conducting portion 331 and the second signal conducting portion 332. The capacitor 350 is configured as a lumped element, a distributed element, or other type of element. For example, a capacitor configured as a distributed element may include zigzagged conductor lines and a dielectric material that has a high permittivity positioned between the zigzagged conductor lines.

When the capacitor 350 is inserted into the first transmission line, the resonator 310 has a characteristic of a metamaterial. The metamaterial indicates a material having a predetermined electrical property that has not been discovered in nature, in other words, having an artificially designed structure. An electromagnetic characteristic of the materials existing in nature may have a unique magnetic permeability or a unique permittivity. Most materials may have a positive magnetic permeability or a positive permittivity.

In the case of most materials, a right hand rule may be applied to an electric field, a magnetic field, and a pointing vector. Thus, the corresponding materials may be referred to as right handed materials (RHMs). However, the metamaterial that has a magnetic permeability or a permittivity absent in nature is classified into an epsilon negative (ENG) material, a mu negative (MNG) material, a double negative (DNG) material, a negative refractive index (NRI) material, and a left-handed (LH) material, based on a sign of the corresponding permittivity or magnetic permeability.

When a capacitance of the capacitor 350 inserted as the lumped element is appropriately determined, the resonator 310 has characteristics of the metamaterial. Because the resonator 310 may have a negative magnetic permeability by appropriately adjusting the capacitance of the capacitor 350, the resonator 310 may also be referred to as an MNG resonator. Various criteria may be applied to determine the capacitance of the capacitor 350. For example, the criteria may include a criterion for enabling the resonator 310 to have characteristics of the metamaterial, a criterion for enabling the resonator 310 to have a negative magnetic permeability in a target frequency, or a criterion for enabling the resonator 310 to have a zeroth order resonance characteristic in the target frequency. Based on at least one criterion among the aforementioned criteria, the capacitance of the capacitor 350 is determined.

In one illustrative example, the resonator 310, also referred to as the MNG resonator 310, has a zeroth order resonance characteristic, as a resonance frequency, of a frequency when a propagation constant is "0". Because the resonator 310 may have a zeroth order resonance characteristic, the resonance frequency may be independent with respect to a physical size of the MNG resonator 310. By appropriately configuring the capacitor 350, the MNG resonator 310 may sufficiently change the resonance frequency without changing the physical size of the MNG resonator 310.

In a near field, for instance, the electric field is concentrated on the capacitor 350 inserted into the first transmission line. Accordingly, due to the capacitor 350, the magnetic field is dominant in the near field. The MNG resonator 310 has a relatively high Q-argument using the capacitor 350 of the lumped element and; thus, it may be possible to enhance an efficiency of power transmission. For example, the Q-argument may indicate a level of an ohmic loss or a ratio of a reactance with respect to a resistance in the wireless power transmission. The efficiency of the wireless power transmission increases according to an increase in the Q-argument.

Although not illustrated in FIG. 3b, a magnetic core may be further provided to pass through the MNG resonator 310. The magnetic core increases a power transmission distance.

Referring to FIG. 3a and FIG. 3b, the feeder 320 includes a second transmission line, a third conductor 371, a fourth conductor 372, a fifth conductor 381, and a sixth conductor 382.

The second transmission line includes a third signal conducting portion 361 and a fourth signal conducting portion 362 in an upper portion of the second transmission line. In addition, the second transmission line includes a second ground conducting portion 363 in a lower portion of the second transmission line. The third signal conducting portion 361 and the fourth signal conducting portion 362 face the second ground conducting portion 363. Current flows through the third signal conducting portion 361 and the fourth signal conducting portion 362.

Additionally, one end of the third signal conducting portion 361 is shorted to the third conductor 371, and another end of the third signal conducting portion 361 is connected to the fifth conductor 381. One end of the fourth signal conducting portion 362 is shorted to the fourth conductor 372, and another end of the fourth signal conducting portion 362 is connected to the sixth conductor 382. The fifth conductor 381 is connected to the first signal conducting portion 331, and the sixth conductor 382 is connected to the second signal conducting portion 332. The fifth conductor 381 and the sixth conductor 382 are connected in parallel to both ends of the capacitor 350. In this example, the fifth conductor 381 and the sixth conductor 382 are used as input ports to receive an RF signal as an input.

Accordingly, the third signal conducting portion 361, the fourth signal conducting portion 362, the second ground conducting portion 363, the third conductor 371, the fourth conductor 372, the fifth conductor 381, the sixth conductor 382, and the resonator 310 are connected to each other, so that the resonator 310 and the feeder 320 may have an electrically closed-loop structure. The term "loop structure" may include, for example, a polygonal structure such as a circular structure or a rectangular structure. When an RF signal is received through the fifth conductor 381 or the sixth conductor 382, input current flows through the feeder 320 and the resonator 310, a magnetic field is formed due to the input current and a current is induced to the resonator 310 by the formed magnetic field. A direction of the input current flowing through the feeder 320 may be the same as a direction of the induced current flowing through the resonator 310. As a result, strength of the total magnetic field may increase at the center of the resonator 310, but may decrease outside the resonator 310.

An input impedance is determined based on an area of a region between the resonator 310 and the feeder 320 and; as a result, a separate matching network used to match the input impedance to an output impedance of a PA may not be required. For example, even when the matching network is used, the input impedance may be determined by adjusting a size of the feeder 320 and thus, a structure of the matching network may be simplified. The simplified structure of the matching network may minimize a matching loss of the matching network.

The second transmission line, the third conductor 371, the fourth conductor 372, the fifth conductor 381, and the sixth conductor 382 form the same structure as the resonator 310. In an example in which the resonator 310 has a loop structure, the feeder 320 may also have a loop structure. In another example in which the resonator 310 has a circular structure, the feeder 320 may also have a circular structure. However, in an alternative configuration, the resonator 310 has a loop structure and the feeder 320 has a circular structure. In another configuration, the resonator 310 has a circular structure and the feeder 320 has a loop structure.

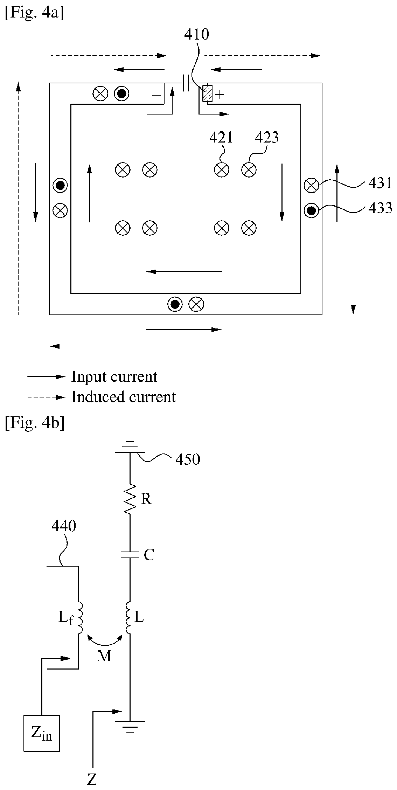

FIG. 4a illustrates an example of a distribution of a magnetic field within a resonator based on feeding of a feeder, in accordance with an embodiment. In other words, FIG. 4a illustrates the resonator 310 and the feeder 320 of FIG. 3a, and FIG. 4b illustrates one equivalent circuit of a feeder 440, and one equivalent circuit of a resonator 450.

In one illustrative example, a feeding operation refers to supplying power to a source resonator in wireless power transmission, or refers to supplying AC power to a rectification unit in a wireless power transmission.

FIG. 4a illustrates a direction of input current flowing through the feeder, and a direction of induced current induced from the source resonator. Additionally, FIG. 4a illustrates a direction of a magnetic field formed from the input current from the feeder, and a direction of a magnetic field formed from the induced current from the source resonator.

Referring to FIG. 3a, FIG. 3b, and FIG. 4a, the fifth conductor 381 or the sixth conductor 382 of the feeder 320 are used as an input port 410. The input port 410 receives an RF signal as an input. The RF signal is output from a power amplifier (PA), such as PA 112 of FIG. 1. The PA increases or decreases an amplitude of the RF signal based on a demand from a target device. The RF signal received at the input port 410 is displayed as an input current flowing through the feeder. The input current flows in a clockwise direction through the feeder 320, along a transmission line of the feeder 320. The fifth conductor 381 of the feeder 320 is electrically connected to the resonator. More specifically, the fifth conductor 381 is connected to a first signal conducting portion of the resonator. Accordingly, the input current flows through the resonator, as well as, through the feeder 320. The input current flows in a counterclockwise direction through the resonator. The input current flowing through the resonator produces a magnetic field that generates an induced current through the resonator. The induced current may flow in a clockwise direction through the resonator. For example, the induced current transfers energy to a capacitor of the resonator, and a magnetic field is formed due to the induced current. In this example, the input current flowing through the feeder and the resonator is indicated by a solid line of FIG. 4a, and the induced current flowing through the resonator is indicated by a dotted line of FIG. 4a.

A direction of a magnetic field formed by a current may be determined based on the right hand rule. As illustrated in FIG. 4a, within the feeder, a direction 421 of a magnetic field formed due to the input current flowing through the feeder may be identical to a direction 423 of a magnetic field formed by the induced current flowing through the resonator. Accordingly, the strength of the total magnetic field may increase within the feeder.

Additionally, in a region between the feeder and the resonator, a direction 433 of a magnetic field formed by the input current flowing through the feeder is opposite to a direction 431 of a magnetic field formed by the induced current flowing through the source resonator, as illustrated in FIG. 4a. Accordingly, the strength of the total magnetic field decreases in the region between the feeder and the resonator.

Typically, a strength of a magnetic field decreases at a center portion of a resonator with the loop structure, and increases outside the resonator. However, referring to FIG. 4a, the feeder is electrically connected to both ends of a capacitor of the resonator, and, accordingly, the induced current of the resonator flows in the same direction as the input current of the feeder. Because the induced current of the resonator flows in the same direction as the input current of the feeder, the strength of the total magnetic field increases within the feeder, and decreases outside the feeder. As a result, as a result of the configuration of the feeder, the strength of the total magnetic field increases at the center of the resonator with the loop structure, and decreases outside the resonator. Thus, the strength of the total magnetic field may be equalized within the resonator.

The power transmission efficiency to transfer a power from the resonator to a target resonator may be in proportion to the strength of the total magnetic field formed in the resonator. In other words, when the strength of the total magnetic field increases at the center of the resonator, the power transmission efficiency also increases.

Referring to FIG. 4B, in one configuration, the feeder 440 and the resonator 450 are equivalent circuits. An example of an input impedance $Z_{in}$ viewed in a direction from the feeder 440 to the resonator 450 is given in Equation 1.

[Equation 1]

$$Z_{in} = \frac{(\omega M)^2}{Z}$$

In Equation 1, M denotes a mutual inductance between the feeder 440 and the resonator 450, $\omega$ denotes a resonance frequency between the feeder 440 and the resonator 450, and Z denotes an impedance viewed in a direction from the resonator 450 to a target device. In one illustrative example, the input impedance $Z_{in}$ may be in proportion to the mutual inductance M. Accordingly, the input impedance $Z_{in}$ is controlled by adjusting the mutual inductance M. The mutual inductance M is adjusted based on an area of a region between the feeder 440 and the resonator 450. The area of the region between the feeder 440 and the resonator 450 is adjusted based on a size of the feeder 440. Accordingly, the input impedance $Z_{in}$ is determined based on the size of the feeder 440 and; thus, a separate matching network is not required to perform impedance matching with an output impedance of a PA.

In a target resonator and a feeder that are included in a wireless power reception apparatus, a magnetic field may be distributed as illustrated in FIG. 4a. For example, the target resonator receives wireless power from a source resonator through magnetic coupling. Due to the received wireless power, induced current is generated in the target resonator. A magnetic field formed due to the induced current in the target resonator may cause another induced current to be generated in the feeder. In this example, when the target resonator is connected to the feeder as illustrated in FIG. 4a, the induced current generated in the target resonator flows in the same direction as the induced current generated in the feeder. Thus, the strength of the total magnetic field increases within the feeder, but decreases in a region between the feeder and the target resonator.

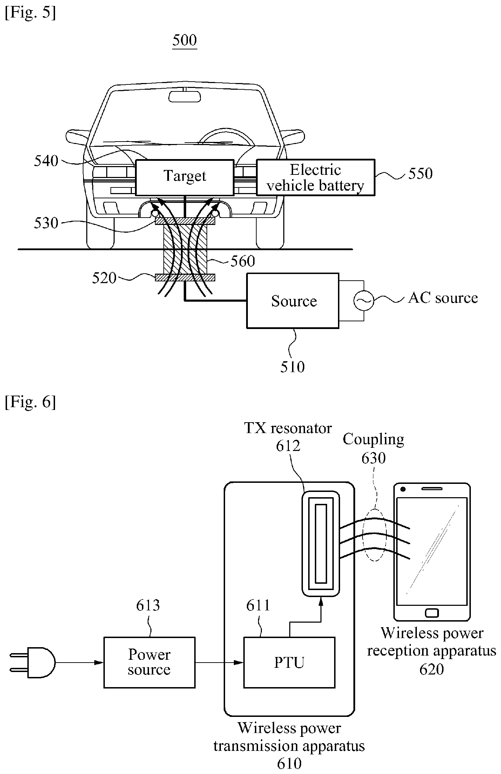

FIG. 5 illustrates an example of an electric vehicle charging system, in accord with an embodiment.

Referring to FIG. 5, an electric vehicle charging system 500 includes a source 510, a source resonator 520, a target resonator 530, a target 540, and an electric vehicle battery 550.

The electric vehicle charging 500 may have a similar structure to the wireless power transmission system of FIG. 1. The source 510 and the source resonator 520 in the electric vehicle charging system 500 function as a source. Additionally, the target resonator 530 and the target 540 in the electric vehicle charging system 500 function as a target.

The source 510 includes a variable SMPS, a TX controller, and a communication unit, similar to the source 110 of FIG. 1. The target 540 includes a matching network, a rectification unit, a DC/DC converter, a communication unit, and an RX controller, similar to the target 120 of FIG. 1.

The electric vehicle battery 550 is charged by the target system 540.

The electric vehicle charging 500 uses a resonant frequency in a band of a few KHz to tens of MHz.

The source 510 generates an amount of power based on and depending on a vehicle to be charged, a capacity of a battery, and a charging state of the battery, and supplies the generated power to the target system 540.

The source 510 controls the source resonator 520 and the target resonator 530 to be aligned. For example, when the source resonator 520 and the target resonator 530 are not aligned, the controller of the source 510 transmits a message to the target 540, and controls alignment between the source resonator 520 and the target resonator 530.

For example, the source resonator 520 and the target resonator 530 not being aligned may result in the target resonator 530 not being located at a position that enables maximum magnetic resonance. When a vehicle does not stop accurately aligning the source resonator 520 with the target resonator 530, the source 510 is configured to induce or control the source resonator 520 and the target resonator 530 to be adjusted. The adjustment would include adjusting a position of at least one of the source resonator 520 and the target resonator 530 to be repositioned so that both resonators are aligned thereby enabling maximum magnetic resonance between the source 510 and the target 540 in the electric vehicle. In an example, the source resonator 520 includes a superconductive material. In this example, the source resonator 520 is cooled through a refrigerant cooled by a cooling system.

In another example, the source resonator 520 and the target resonator 530 are connected to a driving unit 560. The target resonator 530 connected to the driving unit 560 is not necessarily mounted on an electric vehicle. In this example, the electric vehicle would include the target 540 and the electric vehicle battery 550. Additionally, the source 510 would include the source resonator 520, the driving unit 560, and the target resonator 530.

The source system 510 and the target system 540 transmit or receive an ID of a vehicle, or exchange various messages through communication.

The descriptions of FIGS. 2 through 4B may be applied to the electric vehicle charging system 500. However, the electric vehicle charging system 500 may use a resonant frequency in a band of a few KHz to tens of MHz, and may transmit power that is equal to or higher than tens of watts to charge the electric vehicle battery 550.

Impedance matching between a PA and a source resonator in a wireless power transmission apparatus may be maintained, despite a systematic change in a wireless power transmission system, for example, a change in a number of wireless power reception apparatuses and a change in a load impedance. Accordingly, it is possible to efficiently configure a wireless power transmission system, without an additional matching network.

FIG. 6 illustrates an example of a coupling region detection system, in accordance with an embodiment.

Referring to FIG. 6, the coupling region detection system includes a wireless power transmission apparatus 610, and a wireless power reception apparatus 620.

The wireless power transmission apparatus 610 includes a power transmitting unit (PTU) 611, a transmitting (TX) resonator 612, and a power source 613. The PTU 611 includes a variable a variable switching mode power supply (SMPS), a power amplifier (PA), a matching network, a TX controller, and a communication unit, similar to the configuration as illustrated and described with respect to FIG. 1. The TX resonator 612 and the power source 613 may be located inside or outside the PTU 611. The variable SMPS, the PA, the matching network, the TX controller, and the communication unit have been described with reference to FIGS. 1 through 5 and, accordingly, further description thereof is omitted herein.

The wireless power transmission apparatus 610 transmits power to the wireless power reception apparatus 620 through the TX resonator 612. Coupling 630 indicates that wireless power is transmitted from the TX resonator 612 to the wireless power reception apparatus 620. A transmission efficiency of wireless power may vary due to a distance between a wireless power transmission apparatus and a wireless power reception apparatus, a change in impedance, a change in frequency, and other factors. To increase the transmission efficiency of the wireless power, the distance between the wireless power transmission apparatus and the wireless power reception apparatus at least one of the impedance, the frequency, and other factors may be adjusted.

The wireless power transmission apparatus 610 controls a wireless power transmission method so that the transmission efficiency of wireless power increases based on an amount of wireless power to be transmitted and information received from the wireless power reception apparatus 620. For example, the wireless power transmission apparatus 610 induces or directs the wireless power reception apparatus 620 to be located at a position enabling the wireless power reception apparatus 620 to efficiently receive wireless power, or induces or directs the wireless power reception apparatus 620 to receive power from a TX resonator with a highest power reception rate among a plurality of TX resonators.

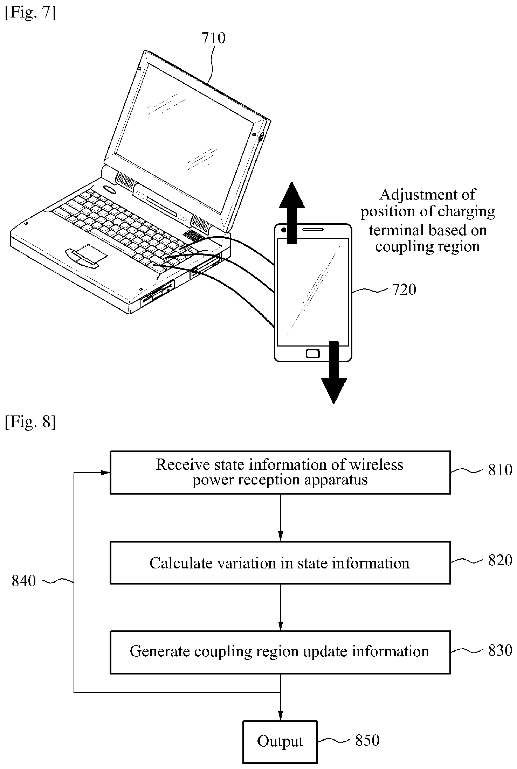

FIG. 7 illustrates an example of a coupling region detection system based on movement of a terminal, in accord with an embodiment.

Referring to FIG. 7, a position of a wireless power reception apparatus 720 is adjusted so that the wireless power reception apparatus 720 is located in an optimum coupling region. A coupling region refers to a region in which the wireless power reception apparatus 720 is able to receive wireless power from a wireless power transmission apparatus 710. The wireless power transmission apparatus 710 induces or directs the wireless power reception apparatus 720 to be located in the optimum coupling region, through a feedback signal regarding a change in the position of the wireless power reception apparatus 720. The feedback signal indicative of the change in the position of the wireless power reception apparatus 720 is provided using one of a visual scheme, a tactile scheme, and an auditory scheme. In an example in which a power reception amount of the wireless power reception apparatus 720 is reduced due to the change in the position of the wireless power reception apparatus 720, the wireless power transmission apparatus 710 outputs a warning sound. In another example in which the wireless power reception apparatus 720 is located in a place in which a power reception amount is determined to be appropriate, the wireless power transmission apparatus 710 transmits an instruction to shake the wireless power reception apparatus 720 to the wireless power reception apparatus 720.

FIG. 8 illustrates an example of an operation method of a wireless power transmission apparatus to detect a coupling region, in accordance with an embodiment.

Referring to FIG. 8, at operation 810, the method receives state information of the wireless power reception apparatus. The state information of the wireless power reception apparatus includes, for example, at least one of an impedance, received power, received voltage, and received current. The received power is wireless power received at the wireless power reception apparatus from the wireless power transmission apparatus. The impedance is an entire impedance of the wireless power reception apparatus, or an impedance of a predetermined structural element included in the wireless power reception apparatus, for example, an impedance of a load included in the wireless power reception apparatus. The received voltage or the received current is voltage or current associated with wireless power received by the wireless power reception apparatus from the wireless power transmission apparatus.

At operation 820, the method calculates a variation in the state information. The variation in the state information refers to a variation in at least one of an impedance, received voltage, received current, and power that is received from the wireless power transmission apparatus. For example, when a current time is assumed to be "T," the variation in the state information indicates a difference between a state information value received in the current time T and a state information value received in a time "T-1."

At operation 830, the method generates coupling region update information. Based on the variation in the state information, the coupling region update information is generated by forming data indicative of how close a position of the wireless power reception apparatus is to the optimum coupling region. The method induces, based on the coupling region update information, the wireless power reception apparatus to be located at an appropriate coupling region. The coupling region update information includes, for example, information regarding whether a power reception rate of the wireless power reception apparatus is increased based on a movement of the wireless power reception apparatus.

At operation 840, the method repeatedly performs operations 810 through 830. By repeatedly performing operations 810 through 830, the method enables the coupling region update information to continue to be updated based on information about a current position of the wireless power reception apparatus.

At operation 850, the method outputs the coupling region update information. In an example, the method of the wireless power transmission apparatus outputs the coupling region update information through an output unit of the wireless power transmission apparatus, using a visual scheme, a tactile scheme, or an auditory scheme, so that a user of a wireless power transmission and reception system recognizes the coupling region update information. In another example, the wireless power transmission apparatus transmits the coupling region update information to the wireless power reception apparatus, so that an output unit at the wireless power reception apparatus outputs the coupling region update information using a visual scheme, a tactile scheme, or an auditory scheme.

In accordance with another illustrative configuration, the wireless power transmission apparatus and method thereof visually displays the coupling region update information on a display unit, and a user of the wireless power reception apparatus may adjust the position of the wireless power reception apparatus based on visual information recognized through the display unit. In this example, the visual information includes feedback regarding whether movement of the wireless power reception apparatus is appropriate. For example, the wireless power transmission apparatus provides feedback using different colors to distinguish an increase in the power reception rate from a decrease in the power reception rate based on the movement of the wireless power reception apparatus, and induces the location of the wireless power reception apparatus. Additionally, the visual information indicates induction of an appropriate movement of the wireless power reception apparatus. For example, a current position of the wireless power reception apparatus, a target position of the wireless power reception apparatus, and a distribution chart of wireless power are displayed in diagram form on the display unit.

In another example, the wireless power transmission apparatus transmits the coupling region update information to the wireless power reception apparatus. In this example, the wireless power reception apparatus adjusts an appropriate position of the wireless power reception apparatus by providing a feedback signal about a movement of the wireless power reception apparatus based on the received coupling region update information. In one illustrative configuration, the feedback signal may be dynamically, without user intervention, processed and provided from the wireless power reception apparatus to dynamically, without user intervention, adjust the position of the wireless power reception apparatus. In an alternative illustrative configuration, a user may adjust the position of the wireless power reception apparatus based on the feedback signal. For example, when the wireless power reception apparatus is determined to be currently located in the optimum coupling region, the wireless power reception apparatus notifies the user of the wireless power reception apparatus of the current position of the wireless power reception apparatus using a vibration signal.

It is to be understood that in the embodiment of the present invention, the operations in FIG. 8 are performed in the sequence and manner as shown although the order of some operations and the like may be changed without departing from the spirit and scope of the described configurations. In accordance with an illustrative example, a computer program embodied on a non-transitory computer-readable medium may also be provided, encoding instructions to perform at least the method described in FIG. 8.

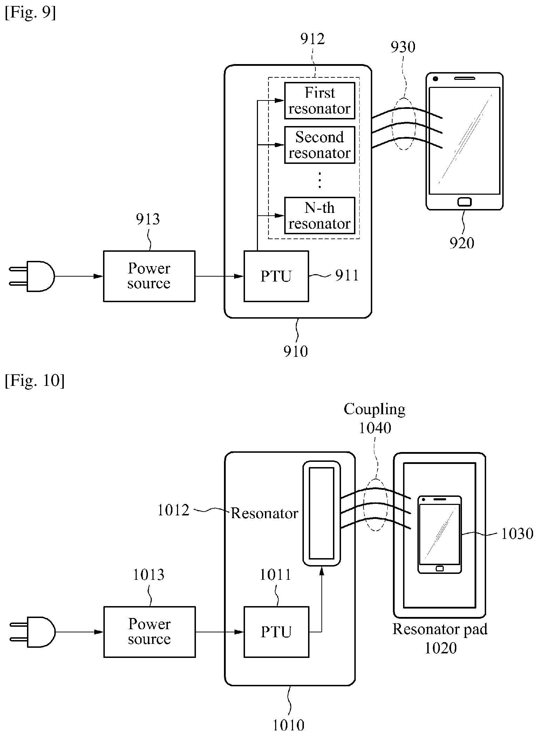

FIG. 9 is a diagram illustrating an example of the coupling region detection system to detect the coupling region using the wireless power transmission apparatus including a plurality of resonators, in accordance with an embodiment.

Referring to FIG. 9, the coupling region detection system includes a wireless power transmission apparatus 910, and a wireless power reception apparatus 920. The wireless power transmission apparatus 910 includes a PTU 911, a power source 913, and a plurality of resonators 912, for example a first resonator, a second resonator, to an N-th resonator. The power source 913 may be located inside or outside the wireless power transmission apparatus 910. In a configuration in which the power source 913 is located inside the wireless power transmission apparatus 910, the power source 913 may be located inside or outside the PTU 911. The resonators 912 may be an integral structural unit or physically separated from each other, and may be located inside or outside the PTU 911.

The resonators 912 transmit wireless power through a control of the PTU 911. The wireless power reception apparatus 920 receives power from the resonators 912 through a coupling 930 formed between the wireless power transmission apparatus 910 and the wireless power reception apparatus 920.

For example, based on a characteristic of resonance power transmitted from the resonators 912, a unique coupling region or unique coupling regions may be formed. In this example, a power reception rate of the wireless power reception apparatus 920 is determined based on a position of the wireless power reception apparatus 920 located in one of coupling regions formed by the resonators 912.

The wireless power transmission apparatus 910 increases the power reception rate by adjusting a position of the wireless power reception apparatus 920. The wireless power transmission apparatus 910 performs operations 810 through 850 of FIG. 8, and further includes a switching circuit (not illustrated) configured to switch the resonators 912.

The wireless power transmission apparatus 910 acquires information of one of the resonators 912 that forms a most efficient coupling with the wireless power reception apparatus 920 based on generated coupling region update information. Additionally, the wireless power transmission apparatus 910 controls the switching circuit so that the coupling 930 is formed between the resonator and the wireless power reception apparatus 920.

In an example of a plurality of wireless power reception apparatuses and a wireless power transmission apparatus including a plurality of resonators, the wireless power transmission apparatus controls a switching circuit so that coupling may be formed between each of the wireless power reception apparatuses and a resonator that most efficiently receive power among the resonators. In another example in which a wireless power transmission apparatus includes a plurality of resonators and is installed in an electric vehicle charging station, the wireless power transmission apparatus controls a switching circuit so that an electric vehicle may receive power supply from a closest resonator.

FIG. 10 is a diagram illustrating an example of the coupling region detection system to detect the coupling region using a resonator pad, in accordance with an embodiment.

Referring to FIG. 10, the coupling region detection system includes a wireless power transmission apparatus 1010, a resonator pad 1020, and a wireless power reception apparatus 1030. The wireless power transmission apparatus 1010 includes a PTU 1011, a resonator 1012, and a power source 1013. The power source 1013 may be located inside or outside the wireless power transmission apparatus 1010. In a configuration in which the power source 1013 is located inside the wireless power transmission apparatus 1010, the power source 1013 may be located inside or outside the PTU 1011. The resonator 1012 may be located inside or outside the PTU 1011.

Power is transmitted from the wireless power transmission apparatus 1010 to the resonator pad 1020, and coupling 1040 is formed between the wireless power transmission apparatus 1010 and the resonator pad 1020. The resonator pad 1020 may function as a transceiver configured to receive wireless power from the wireless power transmission apparatus 1010 and to transmit the wireless power to the wireless power reception apparatus 1030. The resonator pad 1020 transmits state information to the wireless power transmission apparatus 1010. The state information includes, for example, at least one of an impedance, received power, received voltage, and received current.

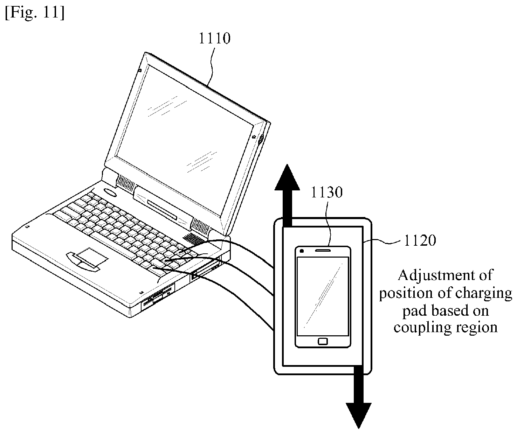

FIG. 11 is a diagram illustrating an example of the coupling region detection system based on movement of the resonator pad.

Referring to FIG. 11, the coupling region detection system includes a wireless power transmission apparatus 1110, a resonator pad 1120, and a wireless power reception apparatus 1130.

The resonator pad 1120 transmits to the wireless power transmission apparatus 1110 state information associated with at least one of an impedance, received power, received voltage, and received current. The wireless power transmission apparatus 1110 induces the resonator pad 1120 to be located in an optimum coupling region, based on the state information received from the resonator pad 1120. In the optimum coupling region, the resonator pad 1120 is enabled to efficiently receive wireless power, and transmit the received wireless power to the wireless power reception apparatus 1130. Detection of a coupling region has been described with reference to FIGS. 1 through 10, and accordingly further description thereof is omitted herein.

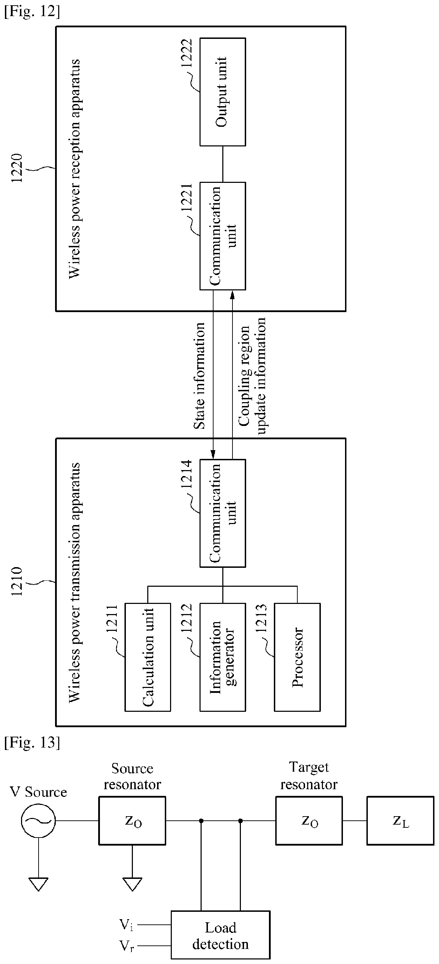

FIG. 12 illustrates an example of a wireless power transmission apparatus and an example of a wireless power reception apparatus, in accordance with an embodiment.

Referring to FIG. 12, a wireless power transmission apparatus 1210 includes a calculation unit 1211, an information generator 1212, a processor 1213, and a communication unit 1214. Although the calculation unit 1211, the information generator 1212, the processor 1213, and the communication unit 1214 are illustrated as separate structural elements of the wireless power transmission apparatus 1210, the calculation unit 1211, the information generator 1212, the processor 1213, and the communication unit 1214 may be integrally formed as part of the processor 1213. Furthermore, although the calculation unit 1211, the information generator 1212, the processor 1213, and the communication unit 1214 are all within the wireless power transmission unit 1210, the calculation unit 1211, the information generator 1212 and the communication unit 1214 may be external to the wireless power transmission unit 1210.

The communication unit 1214 receives state information of a wireless power reception apparatus 1220. The state information may include, for example, at least one of an impedance, received power, received voltage, and received current.

The calculation unit 1211 calculates a variation in the state information due to movement of the wireless power reception apparatus 1220.

The information generator 1212 generates coupling region update information of the wireless power reception apparatus 1220 based on the calculated variation.

The processor 1213 processes and directs each of the communication unit 1214, the calculation unit 1211 and the information generator 1212 to repeatedly receive, calculate, and generate.

The wireless power transmission apparatus 1210 may include at least two resonators (not illustrated), which are physically separated from each other, and a switching circuit (not illustrated) configured to switch the at least two resonators. Additionally, the wireless power transmission apparatus 1210 may further include a controller (not illustrated) configured to control the switching circuit based on the generated coupling region update information. Furthermore, the wireless power transmission apparatus 1210 may further include an output unit (not illustrated) configured to output the generated coupling region update information. The output unit may output the coupling region update information, using one of a visual scheme, a tactile scheme, and an auditory scheme.

The wireless power reception apparatus 1220 includes a communication unit 1221, and an output unit 1222, as illustrated in FIG. 12.

The communication unit 1221 transmits the state information to the wireless power transmission apparatus 1210, and receives the coupling region update information from the wireless power transmission apparatus 1210.

The output unit 1222 provides a user with the coupling region update information, as feedback, using one of a visual scheme, a tactile scheme, and an auditory scheme.

Description of FIGS. 1 through 11 may be applied to each unit of FIG. 12, without a change, and accordingly further description thereof is omitted herein.

FIG. 13 illustrates an example of a load detection principle, in accordance with an embodiment.

Referring to FIG. 13, load may be detected between a source resonator and a target resonator. During resonance power transmission, a voltage relationship expression based on impedance between the source resonator and the target resonator may be defined as expressed by Equation 2.

[Equation 2]

$$V_{\max} = |V_i| + |V_r| = |V_i| * (1 + |\Gamma|)$$

$$V_{\min} = |V_i| - |V_r| = |V_i| * (1 - |\Gamma|)$$

$$VSWR = \frac{V_{\max}}{V_{\min}} = \left|\frac{V_i}{V_i}\right| \frac{* (1 + |\Gamma|)}{* (1 - |\Gamma|)} = \frac{1 + |\Gamma|}{1 - |\Gamma|}$$

In Equation 2, $V_i$ denotes output voltage of the source resonator, and $V_r$ denotes reflection voltage generated due to impedance mismatching. Additionally, a reflection coefficient in Equation 2 may be defined as given in Equation 3.

[Equation 3]

$$\text{Reflection coefficient } (\Gamma) = \frac{V_r}{V_i} = \frac{Z_L - Z_o}{Z_L + Z_o}$$

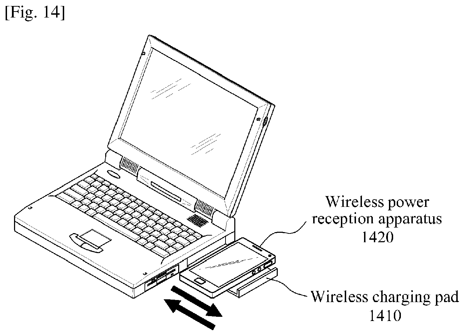

FIG. 14 is a diagram illustrating an example of the wireless power reception apparatus and an example of the wireless power transmission apparatus in which a wireless charging pad is embedded, in accordance with an embodiment.

Referring to FIG. 14, a wireless power reception apparatus 1420 is placed on a wireless charging pad 1410 that is built in a notebook computer. The wireless charging pad 1410 may slide in a direction indicated by arrows of FIG. 14. In an example in which wireless charging is not required, the wireless charging pad 1410 may be embedded into a notebook computer. In another example in which wireless charging is required, the wireless charging pad 1410 may be exposed from the notebook computer.

The wireless charging pad 1410 may be connected to various electronic devices. For example, the wireless charging pad 1410 may be connected to a predetermined portion of a desktop computer, a notebook computer, a monitor, a keyboard, and other electronic devices. Additionally, an electronic device and the wireless charging pad 1410 may be connected using various schemes. The wireless charging pad 1410 may be connected to an electronic device, using a sliding scheme, a folding scheme, a detachable scheme, or a stationary scheme. For example, when the wireless charging pad 1410 is built in an electronic device, space may be efficiently utilized, without a need to perform a separate purchasing and installing operation, and an advantage may be obtained in terms of designs.

The units and apparatuses described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a hardware component may include multiple processors or a processor and a controller. In addition, different processing configurations are possible, such a parallel processors.

Program instructions to perform a method described in FIG. 8, or one or more operations thereof, may be recorded, stored, or fixed in one or more computer-readable storage media. The program instructions may be implemented by a computer. For example, the computer may cause a processor to execute the program instructions. The non-transitory media may include, alone or in combination with the program instructions, data files, data structures, and the like. Examples of non-transitory computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein may be easily construed by programmers skilled in the art to which the embodiments pertain based on and using the flow diagrams and block diagrams of the figures and their corresponding descriptions as provided herein.

A number of examples have been described above. Nevertheless, it will be understood that various modifications may be made within the scope of the appended claims.

**Claims**

1.  A method of a wireless power transmission apparatus (610, 1210), the method comprising:

    receiving state information from a wireless power reception apparatus (620, 1220);
    calculating a variation in the state information due to movement of the wireless power reception apparatus (620, 1220), the state information comprising at least one of an impedance, received power, received voltage, and received current;
    generating coupling region update information of the wireless power reception apparatus (620, 1220) by forming data indicative of how close a position of the wireless power reception apparatus (620, 1220) is to an optimum coupling region based on the variation;
    repeatedly performing the calculating and the generating; and
    outputting the coupling region update information,

**characterized in that** the coupling region update information includes information regarding whether a power reception rate of the wireless power reception apparatus is increased based on the movement of the wireless power reception apparatus.

2. The method of claim 1, further comprising:

   receiving wireless power from another wireless power transmission apparatus (610, 1210); and
   transmitting the received wireless power to the wireless power reception apparatus (620, 1220).

3. The method of claim 1, wherein the outputting comprises outputting the coupling region update information using one of a visual scheme, a tactile scheme, and an auditory scheme.

4. The method of claim 1, further comprising:

   transmitting the generated coupling region update information to the wireless power reception apparatus (620, 1220),
   wherein the wireless power reception apparatus (620, 1220) provides a user with the coupling region update information using one of a visual scheme, a tactile scheme, and an auditory scheme.

5. The method of claim 1, further comprising:

   controlling a switching circuit based on the generated coupling region update information,
   wherein the wireless power transmission apparatus (610, 1210) comprises:

      two resonators separated from each other; and
      the switching circuit configured to switch the two resonators.

6. The method of claim 1, wherein the repeatedly performing comprises:
   updating the coupling region update information to continue based on a current position of the wireless power reception apparatus (620, 1220).

7. A wireless power transmission apparatus (610, 1210), comprising:

   a communication unit (1214) configured to receive state information from a wireless power reception apparatus (620, 1220);
   a calculation unit (1211) configured to calculate a variation in the state information due to movement of the wireless power reception apparatus (620, 1220), the state information comprising at least one of an impedance, received power, received voltage, and received current;
   an information generator (1212) configured to generate coupling region update information of the wireless power reception apparatus (620, 1220) by forming data indicative of how close a position of the wireless power reception apparatus is to an optimum coupling region, based on the variation;
   a processor (1213) configured to process and direct each of the calculation unit (1211) and the information generator (1212) to repeatedly calculate the variation in the state information and generate the coupling region update information; and
   an output unit configured to output the coupling region update information,
   **characterized in that** the coupling region update information includes information regarding whether a power reception rate of the wireless power reception apparatus is increased based on the movement of the wireless power reception apparatus.

8. The wireless power transmission apparatus (610, 1210) of claim 7, further comprising:

   two resonators separated from each other;
   a switching circuit configured to switch the two resonators; and
   a controller configured to control the switching circuit based on the generated coupling region information.

9. The wireless power transmission apparatus (610, 1210) of claim 7, wherein the output unit outputs the coupling region information using one of a visual scheme, a tactile scheme, and an auditory scheme.

10. The wireless power transmission apparatus (610, 1210) of claim 7, wherein the processor (1213) is further configured to detect a reflected wave of communication power or charging power, and detect mismatching between a target resonator the wireless power reception apparatus and a source resonator in the wireless power transmission apparatus based on the detected reflected wave from the source resonator; and
a matching network configured to compensate for impedance mismatching between the source resonator and the target resonator to be optimally matched.

11. The wireless power transmission apparatus (610, 1210) of claim 7, wherein the processor (1213) is configured to induce at least one of a source resonator in the wireless power transmission apparatus (610, 1210) and a target resonator in a wireless power reception apparatus (620, 1220) to be repositioned so that the source resonator and the target resonator are aligned to enable maximum magnetic resonance.

12. A wireless power reception apparatus (620, 1220), comprising:

a communication unit (1221) configured to transmit state information to a wireless power transmission apparatus (610, 1210), wherein the state information comprising at least one of an impedance, received power, received voltage, and received current, and to receive coupling region update information from the wireless power transmission apparatus; and
an output unit (1222) configured to output the coupling region update information,
wherein the coupling region update information is generated by forming data indicative of how close a position of the wireless power reception apparatus (620, 1220) is to an optimum coupling region based on the variation in the state information due to movement of the wireless power reception apparatus (620, 1220),
**characterized in that** the coupling region update information includes information regarding whether a power reception rate of the wireless power reception apparatus is increased based on the movement of the wireless power reception apparatus.

13. The wireless power reception apparatus (620, 1220) of claim 13, further comprising:
a resonator configured to receive wireless power from the wireless power transmission apparatus, wherein the output unit outputs the coupling region update information, as feedback, to a user using one of a visual scheme, a tactile scheme, and an auditory scheme.

**Patentansprüche**

1. Verfahren für eine drahtlose Energieübertragungsvorrichtung (610, 1210), wobei das Verfahren umfasst:

Empfangen von Zustandsinformationen von einer drahtlosen Energieempfangsvorrichtung (620, 1220);
Berechnen einer Variation der Zustandsinformationen aufgrund von Bewegung der drahtlosen Energieempfangsvorrichtung (620, 1220), wobei die Zustandsinformationen mindestens eine von einer Impedanz, empfangenen Leistung, empfangenen Spannung und empfangenem Strom umfassen;
Erzeugen von Kopplungsbereich-Aktualisierungsinformationen der drahtlosen Energieempfangsvorrichtung (620, 1220) durch das Bilden von Daten, die angeben, wie nahe eine Position der drahtlosen Energieempfangsvorrichtung (620, 1220) an einem optimalen Kopplungsbereich basierend auf der Variation ist;
Wiederholtes Durchführen des Berechnens und des Erzeugens; und
Ausgeben der Kopplungsbereich-Aktualisierungsinformationen,
**dadurch gekennzeichnet, dass** die Kopplungsbereich-Aktualisierungsinformationen Informationen darüber beinhalten, ob eine Energieempfangsrate der drahtlosen Energieempfangsvorrichtung basierend auf der Bewegung der drahtlosen Energieempfangsvorrichtung erhöht wird.

2. Verfahren nach Anspruch 1, ferner umfassend:

Empfangen von drahtloser Energie von einer anderen drahtlosen Energieübertragungsvorrichtung (610, 1210); und
Übertragen der empfangenen drahtlosen Energie an die drahtlose Energieempfangsvorrichtung (620, 1220).

3. Verfahren nach Anspruch 1, wobei das Ausgeben die Ausgabe von Kopplungsbereich-Aktualisierungsinformationen unter Verwendung eines von einem visuellen Schema, einem taktilen Schema und einem auditiven Schema umfasst.

4. Verfahren nach Anspruch 1, ferner umfassend:

Übertragen der erzeugten Kopplungsbereich-Aktualisierungsinformationen an die drahtlose Energieempfangsvorrichtung (620, 1220),
wobei die drahtlose Energieempfangsvorrichtung (620, 1220) einem Benutzer die Kopplungsbereich-Aktualisierungsinformationen unter Verwendung eines von einem visuellen Schema, einem taktilen Schema und einem auditiven Schema bereitstellt.

5. Verfahren nach Anspruch 1, ferner umfassend:

Steuern eines Schaltkreises basierend auf den erzeugten Kopplungsbereich-Aktualisierungsinformationen, wobei die drahtlose Energieübertragungsvorrichtung (610, 1210) Folgendes umfasst:

zwei Resonatoren, die voneinander getrennt sind; und
wobei der Schaltkreis dafür ausgelegt ist, die zwei Resonatoren zu schalten.

6. Verfahren nach Anspruch 1, wobei das wiederholte Durchführen umfasst: Aktualisieren der Kopplungsbereich-Aktualisierungsinformationen, um basierend auf einer aktuellen Position der drahtlosen Energieempfangsvorrichtung (620, 1220) fortzufahren.

7. Drahtlose Energieübertragungsvorrichtung (610, 1210), umfassend:

Kommunikationseinheit (1214), die dafür ausgelegt ist, Zustandsinformationen von einer drahtlosen Energieempfangsvorrichtung (620, 1220) zu empfangen;
Berechnungseinheit (1211), die dafür ausgelegt ist, eine Variation in den Zustandsinformation aufgrund von Bewegung der drahtlosen Energieempfangsvorrichtung (620, 1220) zu berechnen, wobei die Zustandsinformationen mindestens eine von einer Impedanz, empfangenen Leistung, empfangenen Spannung und empfangenem Strom umfassen;
Informationserzeugungseinheit (1212), die dafür ausgelegt ist, Kopplungsbereich-Aktualisierungsinformationen der drahtlosen Energieempfangsvorrichtung (620, 1220) zu erzeugen, und zwar durch das Bilden von Daten, die angeben, wie nahe eine Position der drahtlosen Energieempfangsvorrichtung an einem optimalen Kopplungsbereich basierend auf der Variation ist;
Prozessor (1213), der dafür ausgelegt ist, jede von der Berechnungseinheit (1211) und der Informationserzeugungszeinheit (1212) zu verarbeiten und zu steuern, um die Variation der Zustandsinformationen wiederholt zu berechnen und die Kopplungsbereich-Aktualisierungsinformationen zu erzeugen; und
Ausgabeeinheit, die dafür ausgelegt ist, die Kopplungsbereich-Aktualisierungsinformationen auszugeben, **dadurch gekennzeichnet, dass** die Kopplungsbereich-Aktualisierungsinformationen Informationen darüber beinhalten, ob eine Energieempfangsrate der drahtlosen Energieempfangsvorrichtung basierend auf der Bewegung der drahtlosen Energieempfangsvorrichtung erhöht wird.

8. Drahtlose Energieübertragungsvorrichtung (610, 1210) nach Anspruch 7, ferner umfassend:

zwei Resonatoren, die voneinander getrennt sind;
ein Schaltkreis, der dafür ausgelegt ist, die zwei Resonatoren zu schalten; und
Steuerung, die dafür ausgelegt ist, den Schaltkreis basierend auf den erzeugten Kopplungsbereichsinformationen zu steuern.

9. Drahtlose Energieübertragungsvorrichtung (610, 1210) nach Anspruch 7, wobei die Ausgabeeinheit die Kopplungsbereichsinformationen unter Verwendung eines von einem visuellen Schema, einem taktilen Schema und einem auditiven Schema ausgibt.

10. Drahtlose Energieübertragungsvorrichtung (610, 1210) nach Anspruch 7, wobei der Prozessor (1213) ferner dafür ausgelegt ist, eine reflektierte Welle von Kommunikationsenergie oder Ladeenergie zu erfassen, und Fehlanpassungen zwischen einem Zielresonator die drahtlose Energieempfangsvorrichtung und einem Quellresonator in der drahtlosen Energieübertragungsvorrichtung basierend auf der erfassten reflektierten Welle vom Quellresonator zu erfassen; und
Anpassungsnetzwerk, das dafür ausgelegt ist, Impedanz-Fehlanpassungen zwischen dem Quellresonator und dem optimal anzupassenden Zielresonator zu kompensieren.

11. Drahtlose Energieübertragungsvorrichtung (610, 1210) nach Anspruch 7, wobei der Prozessor (1213) dafür ausgelegt ist, mindestens einen von einem Quellresonator in der drahtlosen Energieübertragungsvorrichtung (610, 1210) und einen Zielresonator in einer drahtlosen Energieempfangsvorrichtung (620, 1220) zu einer Neupositionierung zu veranlassen, sodass der Quellresonator und der Zielresonator ausgerichtet sind, um eine maximale magnetische Resonanz zu ermöglichen.

12. Drahtlose Energieempfangsvorrichtung (620, 1220), umfassend:

Kommunikationseinheit (1221), die dafür ausgelegt ist, Zustandsinformationen an eine drahtlose Energieübertragungsvorrichtung (610, 1210) zu übertragen, wobei die Zustandsinformationen mindestens eine von einer Impedanz, empfangenen Leistung, empfangenen Spannung und empfangenem Strom umfassen, und Kopplungsbereich-Aktualisierungsinformationen von der drahtlosen Energieübertragungsvorrichtung zu empfangen; und

Ausgabeeinheit (1222), die dafür ausgelegt ist, die Kopplungsbereich-Aktualisierungsinformationen auszugeben, wobei die Kopplungsbereich-Aktualisierungsinformationen durch das Bilden von Daten erzeugt werden, die angeben, wie nahe eine Position der drahtlosen Energieempfangsvorrichtung (620, 1220) an einem optimalen Kopplungsbereich liegt, basierend auf der Variation der Zustandsinformationen aufgrund von Bewegung der drahtlosen Energieempfangsvorrichtung (620, 1220),

**dadurch gekennzeichnet, dass** die Kopplungsbereich-Aktualisierungsinformationen Informationen darüber beinhalten, ob eine Energieempfangsrate der drahtlosen Energieempfangsvorrichtung basierend auf der Bewegung der drahtlosen Energieempfangsvorrichtung erhöht wird.

13. Drahtlose Energieempfangsvorrichtung (620, 1220) nach Anspruch 13, ferner umfassend:
Resonator, der dafür ausgelegt ist, drahtlose Energie von der drahtlosen Energieübertragungsvorrichtung zu empfangen, wobei die Ausgabeeinheit die Kopplungsbereich-Aktualisierungsinformationen als Rückmeldung an einen Benutzer ausgibt, unter Verwendung eines von einem visuellen Schema, einem taktilen Schema und einem auditiven Schema.

## Revendications

1. Procédé d'un appareil de transmission d'énergie sans fil (610, 1210), le procédé comprenant :

la réception d'informations d'état à partir d'un appareil de réception d'énergie sans fil (620, 1220) ;
le calcul d'une variation dans les informations d'état due à un mouvement de l'appareil de réception d'énergie sans fil (620, 1220), les informations d'état comprenant au moins un élément parmi une impédance, une énergie reçue, une tension reçue et un courant reçu ;
la génération d'informations de mise à jour de région de couplage de l'appareil de réception d'énergie sans fil (620, 1220) grâce à la formation de données indiquant à quel point une position de l'appareil de réception d'énergie sans fil (620, 1220) est proche d'une région de couplage optimum sur la base de la variation ;
la réalisation de manière répétée du calcul et de la génération ; et
la délivrance en sortie des informations de mise à jour de région de couplage,
**caractérisé en ce que** les informations de mise à jour de région de couplage incluent des informations visant à savoir si un débit de réception d'énergie de l'appareil de réception d'énergie sans fil est accru sur la base du mouvement de l'appareil de réception d'énergie sans fil.

2. Procédé de la revendication 1, comprenant en outre :

la réception d'une énergie sans fil à partir d'un autre appareil de transmission d'énergie sans fil (610, 1210) ; et
la transmission de l'énergie sans fil reçue vers l'appareil de réception d'énergie sans fil (620, 1220).

3. Procédé de la revendication 1, dans lequel la délivrance en sortie comprend la délivrance en sortie des informations de mise à jour de région de couplage grâce à l'utilisation d'un schéma parmi un schéma visuel, un schéma tactile et un schéma auditif.

4. Procédé de la revendication 1, comprenant en outre :

la transmission des informations de mise à jour de région de couplage générées vers l'appareil de réception d'énergie sans fil (620, 1220),
dans lequel l'appareil de réception d'énergie sans fil (620, 1220) fournit à un utilisateur les informations de mise à jour de région de couplage grâce à l'utilisation d'un schéma parmi un schéma visuel, un schéma tactile et un schéma auditif.

5. Procédé de la revendication 1, comprenant en outre :

la commande d'un circuit de commutation sur la base des informations de mise à jour de région de couplage générées,
dans lequel l'appareil de transmission d'énergie sans fil (610, 1210) comprend :

deux résonateurs séparés l'un de l'autre ; et
le circuit de commutation configuré pour commuter les deux résonateurs.

6. Procédé de la revendication 1, dans lequel la réalisation de manière répétée comprend :
la mise à jour des informations de mise à jour de région de couplage en vue d'une continuation sur la base d'une position actuelle de l'appareil de réception d'énergie sans fil (620, 1220).

7. Appareil de transmission d'énergie sans fil (610, 1210), comprenant :

une unité de communication (1214) configurée pour recevoir des informations d'état à partir d'un appareil de réception d'énergie sans fil (620, 1220) ;
une unité de calcul (1211) configurée pour calculer une variation dans les informations d'état due à un mouvement de l'appareil de réception d'énergie sans fil (620, 1220), les informations d'état comprenant au moins un élément parmi une impédance, une énergie reçue, une tension reçue et un courant reçu ;
un générateur d'informations (1212) configuré pour générer des informations de mise à jour de région de couplage de l'appareil de réception d'énergie sans fil (620, 1220) grâce à la formation de données indiquant à quel point une position de l'appareil de réception d'énergie sans fil est proche d'une région de couplage optimum, sur la base de la variation ;
un processeur (1213) configuré pour traiter et ordonner à chaque poste parmi l'unité de calcul (1211) et le générateur d'informations (1212) de calculer de manière répétée la variation dans les informations d'état et de générer les informations de mise à jour de région de couplage ; et
une unité de délivrance en sortie configurée pour délivrer en sortie les informations de mise à jour de région de couplage,
**caractérisé en ce que** les informations de mise à jour de région de couplage incluent des informations visant à savoir si un débit de réception d'énergie de l'appareil de réception d'énergie sans fil est accru sur la base du mouvement de l'appareil de réception d'énergie sans fil.

8. Appareil de transmission d'énergie sans fil (610, 1210) de la revendication 7, comprenant en outre :

deux résonateurs séparés l'un de l'autre ;
un circuit de commutation configuré pour commuter les deux résonateurs ; et
un dispositif de commande configuré pour commander le circuit de commutation sur la base des informations de région de couplage générées.

9. Appareil de transmission d'énergie sans fil (610, 1210) de la revendication 7, dans lequel l'unité de délivrance en sortie délivre en sortie les informations de région de couplage grâce à l'utilisation d'un schéma parmi un schéma visuel, un schéma tactile et un schéma auditif.

10. Appareil de transmission d'énergie sans fil (610, 1210) de la revendication 7, dans lequel le processeur (1213) est configuré en outre pour détecter une onde réfléchie de puissance de communication ou de puissance de charge, et pour détecter une non concordance entre un résonateur cible l'appareil de réception d'énergie sans fil et un résonateur source dans l'appareil de transmission d'énergie sans fil sur la base de l'onde réfléchie détectée à partir du résonateur source ; et
un réseau de concordance configuré pour compenser une non concordance d'impédance entre le résonateur source et le résonateur cible pour qu'ils aient une concordance optimale.

11. Appareil de transmission d'énergie sans fil (610, 1210) de la revendication 7, dans lequel le processeur (1213) est configuré pour induire au moins un résonateur, parmi un résonateur source dans l'appareil de transmission d'énergie sans fil (610, 1210) et un résonateur cible dans un appareil de réception d'énergie sans fil (620, 1220), afin d'être repositionné de sorte que le résonateur source et le résonateur cible soient alignés pour obtenir une résonance magnétique maximum.

12. Appareil de réception d'énergie sans fil (620, 1220), comprenant :

une unité de communication (1221) configurée pour transmettre des informations d'état vers un appareil de transmission d'énergie sans fil (610, 1210), les informations d'état comprenant au moins un élément parmi une impédance, une énergie reçue, une tension reçue et un courant reçu, et pour recevoir des informations de mise à jour de région de couplage à partir de l'appareil de transmission d'énergie sans fil ; et
une unité de délivrance en sortie (1222) configurée pour délivrer en sortie les informations de mise à jour de région de couplage,
dans lequel les informations de mise à jour de région de couplage sont générées grâce à la formation de données indiquant à quel point une position de l'appareil de réception d'énergie sans fil (620, 1220) est proche d'une région de couplage optimum, sur la base de la variation dans les informations d'état due à un mouvement de l'appareil de réception d'énergie sans fil (620, 1220),
**caractérisé en ce que** les informations de mise à jour de région de couplage incluent des informations visant à savoir si un débit de réception d'énergie de l'appareil de réception d'énergie sans fil est accru sur la base du mouvement de l'appareil de réception d'énergie sans fil.

13. Appareil de réception d'énergie sans fil (620, 1220) de la revendication 13, comprenant en outre :
un résonateur configuré pour recevoir une énergie sans fil à partir de l'appareil de transmission d'énergie sans fil,
dans lequel l'unité de délivrance en sortie délivre en sortie les informations de mise à jour de région de couplage, en tant que rétroaction, vers un utilisateur qui utilise un schéma parmi un schéma visuel, un schéma tactile et un schéma auditif.

[Fig. 1]

[Fig. 2a]

[Fig. 2b]

→ Input current

----► Induced current

[Fig. 3a]

[Fig. 3b]

[Fig. 4a]

410

421    423

431

433

⟶ Input current
----⟶ Induced current

[Fig. 4b]

450

R

440

C

L_f    L

M

Z_in

Z

[Fig. 5]

500

[Fig. 6]

[Fig. 7]

710

Adjustment of
position of charging
terminal based on
coupling region

720

[Fig. 8]

| Receive state information of wireless power reception apparatus | 810 |

| Calculate variation in state information | 820 |

840

| Generate coupling region update information | 830 |

| Output | 850 |

[Fig. 9]

[Fig. 10]

**EP 3 000 164 B1**

[Fig. 11]

28

[Fig. 12]

[Fig. 13]

[Fig. 14]

Wireless power
reception apparatus
1420

Wireless charging pad
1410

**EP 3 000 164 B1**

**Patent documents cited in the description**

- WO 2012169861 A2
- WO 03105308 A1